# EUROPÄISCHE PATENTSCHRIFT

(11) **EP 3 463 729 B1**
(45) Veröffentlichungstag und Bekanntmachung des Hinweises auf die Patenterteilung: **12.10.2022**
(21) Anmeldenummer: 17727879.3
(22) Anmeldetag: 02.06.2017
(51) Int. Cl.: B23B 51/08

(54) **DREHWERKZEUG MIT AUSTAUSCHBAREN SCHNEIDEINSÄTZEN**
ROTARY TOOL HAVING EXCHANGEABLE CUTTING INSERTS
OUTIL ROTATIF À PLAQUETTES DE COUPE INTERCHANGEABLES

(30) Priorität: 02.06.2016 DE 102016110193
(43) Veröffentlichungstag der Anmeldung: 10.04.2019
(73) Patentinhaber: Gühring KG, 72458 Albstadt (DE)
(72) Erfinder: REBHOLZ, Felix, 72510 Stetten-Frohnstetten (DE); VON PUTTKAMER, Ingo, 72458 Albstadt (DE)
(74) Vertreter: Gleim, Christian Ragnar
(86) Internationale Anmeldenummer: PCT/EP2017/063538
(87) Internationale Veröffentlichungsnummer: WO 2017/207793

(56) Entgegenhaltungen:
- WO-A1-2005/037473
- WO-A1-2006/103650
- CN-A- 104 308 233
- CN-U- 203 030 997
- US-A- 2 050 413
- US-A1- 2006 140 732

## Beschreibung

Die Erfindung betrifft ein Drehwerkzeug für eine spanende Bearbeitung von Werkstücken gemäß dem Oberbegriff des Anspruchs 1, mit einem Werkzeuggrundkörper umfassend einen Einspannabschnitt und einen Werkzeugkopf, sowie einen austauschbaren ersten Schneideinsatz. Ein solches Drehwerkzeug ist aus der CN 203 030 997 U bekannt.

### STAND DER TECHNIK

Aus dem Stand der Technik ist eine Vielzahl von Drehwerkzeugen bekannt, die einen Einsatzgrundkörper mit einem Spannabschnitt und einem Werkzeugkopf aufweisen. Der Einspannabschnitt kann eine Einspannschaft oder eine besonders geformter axialer Endbereich des Drehwerkzeugs sein, der für die Aufnahme in eine spezielle Einspannvorrichtung, wie einer HSK-Spannvorrichtung, ausgebildet ist. Derartige Drehwerkzeuge können Bohr-, Reib-, Fräs- oder Polierwerkzeuge sein. In der Regel weisen gattungsgemäße Drehwerkzeuge im Werkzeugkopf zumindest eine Spankante auf, durch die in einem spanabhebenden Arbeitsgang Material von einem Werkstück entfernt wird. Insbesondere bei Hochleistungsdrehwerkzeugen, beispielsweise HPC- (High Performance Cutting) oder HSC- (High Speed Cutting) Drehwerkzeugen, sind im Drehwerkzeug ein oder mehrere Kühlmittelkanäle vorgesehen, um ein Kühl- und/oder Schmierfluid in den Bereich des Werkzeugkopfs einzubringen, um den Werkzeugkopf und die umfasste Spankante zu kühlen und Materialabtrag aus dem Spanbereich abzuführen.

Im Bereich der Bearbeitung von Aluminium und Weichmetallwerkstoffen, die einen höheren Siliziumgehalt aufweisen, kommt es zu einem hohen Verschleiß eines Drehwerkzeugs aufgrund der Zähigkeit des zu bearbeitenden Werkstücks. Hierdurch werden insbesondere Flächen im Werkzeugkopf eines Drehwerkzeugs mechanisch wie thermisch strapaziert, wodurch diese nach längerer Benutzung des Drehwerkzeugs ausdünnen und verschleißen. Hierdurch besteht die Gefahr, dass die mechanische Stabilität des Drehwerkzeugs, die Schmierfähigkeit und die Lebensdauer eingeschränkt werden. Hierdurch bedingt sind im Stand der Technik bereits Drehwerkzeuge bekannt, in denen ein Schneideinsatz auswechselbar ist, um bei Verschleiß nicht das gesamte Werkzeug sondern nur einen Schneideinsatz austauschen zu können.

So offenbart die DE 10 2009 044 995 A1 ein Drehwerkzeug mit einem austauschbaren Schneideinsatz, der an der Front des Werkzeugkopfes angeordnet ist. Der Schneidsatz wird in eine stirnseitige Einsatznut in den Werkzeugkopf eingeschoben und fixiert. Der Schneideinsatz wird mit Hilfe eines Einspeiseröhrchens, das zum Teil in dem Schneideinsatz und zum Teil in einem zentralen Kühlkanal des Werkzeugkopfes eingreift, zentriert. Weitere gattungsgemäße Drehwerkzeuge werden in der DE 10 20 14 102 952 A1 sowie der EP 0 674 560 B1 offenbart.

Nach einer Spanbearbeitung werden die Oberflächen einer eingebrachten Bohrung oder Senkung in der Regel zur Ausbildung einer hohen Oberflächenqualität mittels eines Reibwerkzeugs nachbearbeitet. Im Stand der Technik sind hierzu kombinierte Bohr- und Reibwerkzeuge bekannt, die in einem Arbeitsgang eine Bohrung herstellen und die Ausnehmungsoberfläche reibend nachbearbeiten können. Demgemäß zeigt die DE 27 50 705 C2 ein kombiniertes Bohr- und Reibwerkzeug. Die Bohrschneiden sind als Hartmetallwendeplatten ausgeführt und auswechselbar, die Reibschneiden sind einstückig mit dem Werkzeugschaft verbunden. Beim Verschleiß der Reibschneiden ist das Gesamtwerkzeug auszutauschen.

Die DE 10 2011 051 374 A1 zeigt ein Bohrwerkzeug mit einem austauschbaren ersten Schneideinsatz (32), der am Werkzeugkopf angeordnet ist und über eine senkrecht zur Werkzeugachse verlaufende Klemmschraube am Werkzeugkopf fixiert wird. Die Klemmschraube verläuft hierbei durch eine Durchgangsbohrung durch den Schneideinsatz. Zumindest ein zweiter Schneideinsatz ist in Längsrichtung versetzt in Richtung Einspannabschnitt angeordnet. Dieser Schneideinsatz stellt eine Wendeschneidplatte dar, die am Rand der Wendel des Bohrwerkzeugs angeschraubt wird. Dabei ist allerdings kein zweiter Schneideinsatz in Form eines Reibschneideinsatzes offenbart, der in einer quer zur Längsachse verlaufenden Durchgangsbohrung im Werkzeugkopf fixiert wird.

Die WO2005/0037473 A1 zeigt ebenso ein Bohrwerkzeug mit einem austauschbaren ersten Schneideinsatz an der Werkzeugkopfspitze sowie einem in Längsrichtung dazu angeordneten zweiten Schneideinsatz. Der zweite Schneideinsatz ist zum Entgraten bzw. Anfassen ausgebildet und verläuft durch eine quer zur Längsachse des Bohrwerkzeugs verlaufende Durchgangsbohrung. In Richtung Einspannabschnitt ist der Schneideinsatz über eine Torsionsfeder gelagert, sodass eine fein einstellbare und minimale horizontale Verschiebung des zweiten Schneideinsatzes in der Durchgangsbohrung ermöglicht wird. Dadurch können Unebenheiten in der Bohrung bzw. in der Herstellung der Bohrung und Einflüsse durch anfallende Späne durch das Bohrwerkzeug ausgeglichen werden. Von der Seite der Werkzeugkopf Spitze wird der zweite Schneideinsatz über eine Platte und eine in Längsrichtung des Werkzeugs verlaufende Schraube geklemmt. Dabei wirkt die Klemmschraube nicht durch den zweiten Schneideinsatz, wodurch ein radiales Verschieben des zweiten Schneideinsatzes bei ungenügendem Verklemmen ermöglicht wird, was auch in dieser Druckschrift ausdrücklich erwünscht ist. Eine präzise radiale Ausrichtung des zweiten Schneidsatzes ist dadurch erschwert bzw. nicht erfüllbar.

In der CN 203 030 997 U wird ebenso ein Bohrwerkzeug mit einem ersten und zweiten Schneideinsatz vergleichbar zur WO 2005/0037473 A1 offenbart. Der zweite Schneideinsatz ist ebenso in einer quer zur Längsachse des Werkzeugs angeordneten Öffnung angebracht. Im Unterschied zur WO 2005/0037473 A1 verläuft der zweite Schneideinsatz über die komplette Länge der Öffnung, sodass an beiden Austrittsseiten Reibschneiden angeordnet sind. Der zweite Schneideinsatz wird über zwei Zapfen sowie über mehrere Befestigungsmittel fixiert. Die Befestigungsmittel verlaufen hierbei in Quer- und Längsrichtung des Bohrwerkzeugen. Der zweite Schneideinsatz umfasst zwei Zapfen und wird seitlich in den Werkzeugkopf eingeschoben. Dabei ist die Öffnung für den zweiten Schneideinsatz keine Durchgangsbohrung, sondern ein einseitig offener Schlitz. Die Fixierung dieses zweiten Schneideinsatzes erfolgt weder durch eine Durchgangsbohrung noch durch ein axial zentral angeordnetes Befestigungsmittel. Eine Axialzentrierung des zweiten Schneidsatzes ist dadurch nicht sichergestellt und der Schneidsatz kann radial auswandern.

Die CN 202 591 689 U zeigt ein Bohr- beziehungsweise Schneidwerkzeug, das speziell bei der Herstellung von Bauteilen von Druckbehältern zum Einsatz kommt. Dieses besitzt einen zweiten Schneideinsatz in Form einer Reibschneide, wobei diese in einem Durchgangsloch im Werkzeugkopf fixiert ist. Die Reibschneide wird über einen quer zur Längsachse des Werkzeugs angeordneten Bolzen klemmend fixiert. Das Befestigungsmittel des zweiten Schneideinsatzes verläuft nicht radial durch den zweiten Schneideinsatz hindurch sowie nicht in Achsrichtung des Werkzeugs. Vergleichbar zur WO 2005/0037473 A1 kann sich demnach der zweite Schneideinsatz innerhalb der Durchgangsbohrung horizontal verschieben, wodurch die Axialpositionierung ungenau wird.

Aufgabe der Erfindung ist es, ein Drehwerkzeug mit mehreren Spanbereichen vorzuschlagen, das eine materialsparende und kostensparende Herstellung sowie und eine Langlebigkeit des Drehwerkzeugs sicherstellt.

Diese Aufgabe wird durch ein Drehwerkzeug nach dem Anspruch 1 gelöst. Vorteilhafte Weiterentwicklungen der Erfindung sind Gegenstand der Unteransprüche.

### OFFENBARUNG DER ERFINDUNG

Gegenstand der Erfindung ist ein Drehwerkzeug für eine spanende Bearbeitung von Werkstücken, mit einem Werkzeuggrundkörper umfassend einen Einspannabschnitt und einen Werkzeugkopf, sowie einen austauschbaren ersten Schneideinsatz mit zumindest einem, eine erste Spankante aufweisenden, ersten Spanbereich, wobei der erste Schneideinsatz von der Frontseite des Werkzeugkopfes in eine Einsatznut des Werkzeuggrundkörpers einsteckbar und verdrehsicher befestigbar ist.

Erfindungsgemäß ist ein austauschbarer zweiter Schneideinsatz, insbesondere ein Reibschneideinsatz, in einer in Achsrichtung des Drehwerkzeugs in Richtung Einspannabschnitt versetzten Position zum ersten Schneideinsatz am Werkzeugkopf befestigt ist. Der zweite Schneideinsatz umfasst einen Einsatzgrundkörper und zumindest einen, zumindest eine zweite Spankante aufweisenden, zweiten Spanbereich.

Es wird vorgeschlagen, dass der zweite Schneideinsatz über eine zentrische Position bezüglich des Werkzeugkopfquerschnittes, von der Frontseite des Werkzeugkopfes fixierbar ist, wobei in der Einsatznut des ersten Schneideinsatzes ein Befestigungsmittel, insbesondere eine Schraube, bevorzugt eine Senkkopfschraube zur Befestigung des zweiten Schneideinsatz angeordnet ist und von der Frontseite zugänglich ist. So kann der zweite Schneideinsatz durch einen Bolzen oder eine Schraube, die auf der Rotationsachse des Drehwerkzeugs angeordnet ist, fixiert werden. Das Befestigungsmittel befindet sich komplett innerhalb des Werkzeugkopfquerschnittes und kann nicht durch Abrieb an der Oberfläche des Werkzeugkopfes beschädigt oder gelöst werden. Zudem erfährt es in der Position auf der Rotationsachse des Drehwerkzeugs die geringstmöglichen Kräfte während der Rotation des Drehwerkzeugs. Ein Austausch des zweiten Schneideinsatzes ist nach Entnahme des ersten Schneideinsatzes möglich.

Weiterhin erfindungsgemäß ist das Befestigungsmittel länger als der Durchmesser D des Einsatzgrundkörpers ausgebildet, wobei das Befestigungsmittel im eingebauten Zustand in dem Einsatzgrundkörper in zumindest einem Bereich außerhalb des Einsatzgrundkörpers ein Gewinde zur Verschraubung mit dem Werkzeuggrundkörper aufweist und bevorzugt in den Bereichen innerhalb des Grundköpers eine glatte Oberfläche aufweist, sodass der Einsatzgrundkörper entgegen dem Befestigungsmittel frei verdrehbar gelagert ist. Dies ist besonders vorteilhaft für eine Zentrierung des zweiten Schneideinsatzes auf der Rotationsache, da sich der Einsatzgrundkörper vor Herstellung der Befestigung gegenüber dem Befestigungsmittel frei bewegen kann. Der zweite Schneideinsatz kann dadurch ohne Verkanten oder Verklemmen gegen den Werkzeugkopf gedrückt werden. Eine verdrehsichere Fixierung findet zwischen dem Befestigungsmittel und dem Werkzeugkopf statt. Eine verdrehsichere Fixierung zwischen zweitem Schneideinsatz und Werkzeugkopf erfolgt durch eine Durchgangsbohrung oder eine Nut, in welche der zweite Schneideinsatz eingeschoben oder eingesteckt wird.

Mit anderen Worten zeigt die Erfindung ein Drehwerkzeug, mit zwei Schneideinsätzen, die in zwei in Längsrichtung des Drehwerkzeugs versetzten Positionen angeordnet sind und lösbar bzw. auswechselbar am Werkzeugkopf montiert sind. Dabei können der erste und der zweite Schneideinsatz auf derselben Seite des Drehwerkzeugs angeordnet sein oder auch an in Umfangsrichtung versetzten Positionen. Bevorzugt ist der erste Schneideinsatz stirnseitig am Werkzeuggrundkörper angeordnet. Jeder Schneideinsatz kann ein, zwei, drei, vier oder mehr Spanbereiche aufweisen. Der zweite Schneideinsatz kann identisch zum ersten Schneideinsatz als Verbreiterungsschneide oder als Reibschneide in Form eines Reibschneideinsatzes ausgebildet sein. Unterschiede liegen hierbei besonders in der Ausbildung der Spanbereiche und der Spankanten. Der austauschbare erste Schneideinsatz kann in einer Einsatznut des Grundkörpers aufgenommen sein und über eine Schraube oder einen Bolzen am Werkzeugkopf fixiert werden. Ebenso kann der erste Schneideinsatz an der Unterseite einen Zapfen aufweisen, der in eine zusätzliche Vertiefung in der Einsatznut eingreift und den ersten Schneideinsatz zusätzlich verdrehsicher und axial ausgerichtet am Werkzeugkopf fixiert. Bei Befestigung mit einer Schraube oder einem Bolzen kann diese radial in den Werkzeugkopf eingreifen. Das gleiche gilt für den zweiten austauschbaren Schneideinsatz. Der zweite Schneideinsatz kann ebenso angeschraubt und / oder eingesteckt werden. Die Befestigung, bevorzugt mittels einer Schraube, des zweiten Schneideinsatzes ist erst nach Abnahme des ersten Schneideinsatzes zugänglich. Hiernach kann eine in der Einsatznut des ersten Scheidensatz vertieft angeordneten Befestigungsmittel der zweite Schneideinsatz aus dem Werkzeuggrundkörper gelöst und aus dem Werkzeuggrundkörper gelöst werden. In der Regel unterliegt der zweite Schneideinsatz einem geringeren Verschleiß als der erste Schneideinsatz und kann mit diesem, oder auch nach einer längeren Standzeit gewechselt werden. Der Werkzeuggrundkörper wird durch die erfindungsgemäße Art der Befestigung nicht weiter geschwächt, auch müssen keine aufwändigen weiteren Befestigungsmittel eingebracht werden. Die Befestigung des ersten Schneideinsatzes kann über ein radiales Befestigungsmittel, beispielsweise eine Einsatzschraube, die in beide Flanken der Einsatznut eingeschraubt ist, befestigt werden.

Bei Ausbildung des zweiten Schneideinsatzes als Reibschneide bzw. Reibschneideinsatz ist vorteilhafterweise der zweite Schneideinsatz besonders nahe am ersten Schneideinsatz angeordnet, sodass eine Nachbearbeitung der Innenoberfläche einer Bohrung über einen möglichst großen Bereich der Bohrung durchgeführt werden kann. Dies erfordert demnach, dass der zweite Schneideinsatz möglichst nahe an der Spitze des Werkzeugkopfs angeordnet ist und etwas nachschneidet. Dadurch kann eine verbesserte Innenoberfläche der Bohrung sowie eine genauere Bohrung nahezu bis zum Bohrgrund erzeugt werden. Die Position des zweiten Schneideinsatzes bestimmt sich u. a. nach dem Verlauf der Wendeln, d. h. dem Spiralwinkel, im Werkzeugkopf, sodass der zweite Schneideinsatz bevorzugt auf der Wendel und nicht in der Nut angeordnet ist.

Sind alle Schneideinsätze austauschbar montiert, kann der Werkzeuggrundkörper eine lange Standzeit aufweisen und ist flexibel für unterschiedliche Schneideinsätze einsetzbar, da die Verschließteile jederzeit ausgetauscht und erneuert werden können.

Vorzugsweise kann der Einsatzgrundkörper austauschbar in eine radiale Durchgangsbohrung des Werkzeugkopfs eingeschoben werden. In einer derartigen Durchgangsbohrung kann die radiale Position des zweiten Spanbereichs variabel eingestellt und fixiert werden. Die ermöglicht ein Drehwerkzeug mit zwei variabel zueinander ausgerichteten Schneideinsätzen, wobei eine Bohrung und gleichzeitig eine Nut oder Ähnliches ausgearbeitet werden können. Beispielsweise können ein Freistich und eine Sicherungsnut mit demselben Drehwerkzeug durchgeführt werden, ohne dass ein Werkzeugwechsel nötig ist. Die Durchgangsbohrung kann in jedem beliebigen Winkel zur Einsatznut ausgebildet sein, wodurch die mindestens eine Spankante in einem beliebigen Winkel zur ersten Spankante bezüglich des Umfangs des Werkzeugkopfes angeordnet werden kann.

In einer von der vorhergehenden Ausführungsform weiterhin bevorzugten Ausführungsform kann die Länge L des Einsatzgrundkörpers geringer oder gleich dem Durchmesser des Werkzeugkopfes sein und der Spanbereich um einen radialen Abstand Δd über den Radius des ersten Spanbereichs überstehen. Bei einer Ausbildung als Reibschneide weist der zweite Schneideinsatz nur einen geringen radialen Überstand der mindestens einen zweiten Spankante gegenüber mindestens einen ersten Spankante auf. So kann die Innenoberfläche einer Bohrung oder Ähnlichem nachbearbeitet werden, ohne dass der Durchmesser der Bohrung eine substantielle Änderung erfährt. Die Oberflächenbeschaffenheit sowie der Reibwert der Oberfläche können dadurch verbessert werden. Hat der Einsatzgrundkörper eine geringere Länge als der Durchmesser des Werkzeugkopfes und unterscheidet sich die Geometrie des Spanbereichs von der des Einsatzgrundkörpers kann ein Bereich zum Abtransport der Späne ausgebildet werden, die durch den zweiten Schneideinsatz erzeugt werden.

In einer weiterentwickelten Ausführungsform kann der Einsatzgrundkörper zylinderförmigen ausgebildet sein und einen kreisförmigen, teilkreisförmigen, rechteckigen oder elliptischen Querschnitt aufweisen, wobei bevorzugt der Querschnitt und / oder die Querschnittsform über die Länge L des Einsatzgrundkörpers veränderlich ist. Die Ausbildung eines veränderlichen Querschnitts ermöglicht ebenso den Abtrag von Späne oder Kühl- bzw. Schmiermittel im Bereich des zweiten Schneideinsatzes. Bevorzugt ist der Einsatzgrundkörper zu den Randbereichen hin verjüngt und / oder abgeflacht ausgebildet. Ein nicht kreisförmiger Querschnitt ermöglicht eine formschlüssige radiale Ausrichtung des Einsatzgrundkörpers beim Einschub in den Werkzeuggrundkörper.

In einer bevorzugten Ausführungsform kann der zweite Schneideinsatz punktsymmetrisch bezüglich eines Punktes auf einer Querschnittfläche auf der halben Länge des zweiten Schneideinsatzes ausgebildet sein. Ein punktsymmetrischer zweiter Schneideinsatz weist an seinen axialen Enden gegenüberliegende zweite Spanbereiche mit jeweils mindestens einer zweiten Spankante auf. Ebenso ist der Einsatzgrundkörper zum Mittelpunkt des Einsatzgrundkörpers symmetrisch ausgebildet. Die Punktsymmetrie ermöglicht, dass eine Bearbeitung eines Bauteils mit dem zweiten Schneideinsatz auf mindestens zwei gegenüberliegenden Seiten eines Drehwerkzeugs möglich ist, was die Standzeit erhöht und die mechanische Belastung im Einsatz verringert. Der Einsatzgrundkörper kann im Symmetriepunkt ein Durchgangsloch zur Anbringung eines Befestigungsmittels wie einer Schraube oder einem Bolzen aufweisen. Dies ermöglicht die Fixierung des zweiten Schneideinsatzes in dem Symmetriepunkt.

In einer bevorzugten Ausführungsform können der Einsatzgrundkörper und der zweite Spanbereich aus getrennten Bauteilen ausgebildet sein, wobei der zweite Spanbereich mit der zweiten Spankante an den Einsatzgrundkörper angelötet, angeschweißt oder angeschraubt ist. Ist der Spanbereich angeschraubt ermöglicht dies den Austausch lediglich des Spanbereichs und nicht des kompletten zweiten Schneideinsatzes. Ebenso kann der Schneideinsatz in einer Nut verklemmt werden. Sind der Einsatzgrundkörper und der Spanbereich aus getrennten Bauteilen ausgebildet, so können durch einfache Herstellverfahren Spanbereiche und Einsatzgrundkörper unterschiedlicher Geometrien gefertigt und kombiniert werden.

In einer bevorzugten Ausführungsform kann der Einsatzgrundkörper ein radiales Durchgangsloch quer zur Einschubrichtung und bevorzugt eine konische Vertiefung aufweist, in der der Kopf des Befestigungsmittels zumindest teilweise versenkt werden kann, wodurch der zweite Schneideinsatz in dem Werkzeugkopf auf der Rotationsachse zentriert befestigt ist. Der versenkte Kopf des Befestigungsmittels ermöglicht es, dass der zweite Schneideinsatz kraft- und formschlüssig fest im Werkzeuggrundkörper montiert werden kann. Bildet der zweite Schneideinsatz eine Reibschneide aus so kann die Oberfläche der Bohrung fast über die komplette Tiefe bis zum Bohrgrund nachbearbeitet werden. Durch die Zentrierung des zweiten Schneideinsatzes auf der Rotationsachse kann bei einer punktsymmetrischen Ausführung des zweiten Schneideinsatzes bezogen auf den Mittelpunkt des Schneideinsatzes jede zweite Spankante in gleichem Abstand zur Oberfläche des Werkzeugkopfes platziert werden, sodass eine exakt zentrierte Bearbeitung mit beiden zweiten Spankanten des zweiten Scheideinsatzes ermöglicht wird.

In einer bevorzugten Ausführungsform kann die Einsatznut in Richtung Einspannabschnitt ein Sackloch aufweisen, das mindestens zwei Abschnitte mit unterschiedlichem Durchmesser aufweist, wobei mindestens ein Abschnitt, bevorzugt ein in Richtung Werkzeugschaft angeordneter Abschnitt, ein Gewinde aufweist. Der näher an der Frontseite des Werkzeugkopfes angeordnete Abschnitt des Sacklochs weist bevorzugt einen größeren Durchmesser als der zweite Abschnitt auf, der weiter von der Frontseite entfernt und in Richtung Werkzeugschaft angeordnet ist. Dadurch kann ein Befestigungsmittel zur Befestigung des zweiten Schneideinsatzes einen Kopf mit einem größeren Durchmesser als der Schaft des Befestigungsmittels umfassen und in das Sackloch eingeschraubt werden. Trägt der zweite Abschnitt das Gewinde, verpresst das Befestigungsmittel, bevorzugt eine Gewindeschraube, den zweiten Schneideinsatz mit dem Werkzeuggrundkörper kraftschlüssig. Dies ermöglicht die Montage oder Demontage eines austauschbaren ersten Schneideinsatzes und eines austauschbaren zweiten Schneideinsatzes in einem Werkzeugkopf durch die folgenden Schritte:
- Einschieben des zweiten Schneideinsatzes in eine radiale Durchgangsbohrung oder eine Nut in den Werkzeugkopf;
- Einstecken eines Befestigungsmittels in Längsrichtung des Drehwerkzeugs durch ein Durchgangsloch des Einsatzgrundkörpers des zweiten Schneideinsatzes;
- Einschrauben des Befestigungsmittels in ein auf der Rotationsachse des Werkzeugkopfes angeordnetes Sackloch mit Gewinde zum Fixieren und Zentrieren des zweiten Schneideinsatzes; dabei Zentrieren durch Versenken des Kopfes des Befestigungsmittels in einer konischen Vertiefung im Durchgangsloch des Einsatzgrundkörpers;
- Einsetzen des ersten Schneideinsatzes in eine Einsatznut von der Frontseite des Werkzeug kopfes;
- Befestigen des ersten Schneideinsatzes durch radiales Einschrauben einer Schraube oder radiales einstecken eines Bolzens in den Werkzeugkopf und durch den Schneideinsatz;
- Wiederholen der Schritte in umgekehrter Reihenfolge zur Demontage des ersten und des zweite Schneideinsatz.

In den Abschnitt des Sacklochs, der näher an der Frontseite angeordnet ist, kann ein Zapfen oder Ähnliches, der am ersten Schneideinsatz vorhanden ist, zur Zentrierung des ersten Schneideinsatzes weiterhin eingesteckt werden, insofern als dass das Befestigungselement tiefer sitzt. Somit kann das Sackloch ebenfalls dazu dienen, eine Rotation des ersten Schneideinsatzes relativ zum Werkzeugkopf zu unterbinden. Ein derartiger Zapfen kann im eingebauten Zustand beider Schneideinsätze in Kontakt mit dem Befestigungsmittel des ersten Schneideinsatzes stehen oder einen Abstand dazu aufweisen.

Die radiale Ausrichtung von ersten Schneideinsatz und zweitem Schneideinsatz kann abgewinkelt sein. Somit können Kühlmittelkanäle, die sich im Werkzeuggrundkörper erstrecken, unverändert geführt werden, und die radiale Ausnehmung im Werkzeuggrundkörper, die den zweiten Schneideinsatz aufnimmt, kann derart ausgerichtet sein, dass ein gleichweiter Abstand vom zweiten Schneideinsatz zu den Kühlmittelkanälen gegeben ist.

Es wird vorgeschlagen, dass ein Schneideinsatzset zumindest ein ersten Schneideinsatz und/oder ein zweiter Schneideinsatz zum Ersatzaustausch in einen Werkzeuggrundkörper des Drehwerkzeugs umfasst. Dies ermöglicht es, an nur einem Werkzeugkopf nacheinander unterschiedliche oder identische erste und/oder zweite Schneideinsätze zu montieren, wodurch der Werkzeugkopf mit dem Einspannabschnitt länger verwendet werden können, was Material-, Erwerbs- und Herstellkosten einspart und die Standzeit erhöht wird. In einer bevorzugten Ausführungsform des Schneideinsatzsets kann ein Befestigungsmittel zur Befestigung des zweiten Schneideinsatzes umfasst sein. Das Befestigungsmittel kann eine Gewindeschraube, bevorzugt mit Senkkopf, weiterhin bevorzugt mit einem Torx- oder Inbusschraubenkopf sein. Somit können alle austauschbaren Einzelteile nachträglich ausgewechselt oder erneuert werden.

Es wird vorgeschlagen, dass ein Werkzeuggrundkörperset zumindest einen Einspannabschnitt und einen Werkzeugkopf mit einer Einsatznut an der Frontseite des Werkzeugkopfes umfasst. Dies ermöglicht den Austausch des Werkzeuggrundkörpers, wenn einzelne erste und/oder zweite Schneideinsätze weiterverwendet werden sollen, und der Werkzeuggrundkörper aufgrund von Verschließ oder Ähnlichem ausgewechselt werden muss.

In einer bevorzugten Ausführungsform des Werkzeuggrundkörpersets kann der Werkzeugkopf eine radiale Durchgangsbohrung in einer in Achsrichtung des Drehwerkzeugs in Richtung Einspannabschnitt versetzten Position zur Einsatznut angeordnet sein. Somit kann ein erster und ein zweiter Schneideinsatz in dem Werkzeug kopf verankert werden.

In einer weiteren bevorzugten Ausführungsform des Werkzeuggrundkörpersets kann in der Einsatznut ein Sackloch auf der Rotationsachse angeordnet sein, das zumindest zwei unterschiedliche Durchmesser aufweist und die Durchgangsbohrung schneidet. Somit kann der zweite Schneideinsatz mit geringem Abstand in einer in Längsrichtung des Drehwerkzeugs versetzten Position in Richtung Einspannabschnitt angebracht werden. Dadurch kann eine Oberfläche einer Bohrung oder Ähnlichem nahezu bis zum Bohrungsgrund mit dem zweiten Schneideinsatz nachbearbeitet werden.

### ZEICHNUNGEN

Weitere Vorteile ergeben sich aus der vorliegenden Zeichnungen und Zeichnungsbeschreibungen. In den Zeichnungen sind Ausführungsbeispiele der Erfindung dargestellt. Die Zeichnung, die Beschreibung und die Ansprüche enthalten zahlreiche Merkmale in Kombination.

Es zeigt:
- **Fig. 1**: eine Außenansicht einer Ausführungsform eines erfindungsgemäßen Drehwerkzeugs;
- **Fig. 2**: eine Draufsicht auf den Frontbereich des Werkzeugkopfes einer Ausführung eines erfindungsgemäßen Drehwerkzeugs;
- **Fig. 3**: einen Ausschnitt aus Fig. 1;
- **Fig. 4**: einen Ausschnitt eines Werkzeugkopfes einer Ausführung eines erfindungsgemäßen Drehwerkzeugs in einer Seitenansicht;
- **Fig. 5**: eine weitere Seitenansicht der Ausführung aus Fig. 4;+
- **Fig. 6**: einen Längsschnitt durch eine Ausschnitt eines Werkzeugkopfes nach Fig. 4;
- **Fig. 7**: einen weiteren Längsschnitt durch eine Ausschnitt eines Werkzeugkopfes nach Fig. 4;
- **Fig. 8**: einen Ausschnitt eines Werkzeugkopfes einer Ausführung eines erfindungsgemäßen Drehwerkzeugs ohne ersten Schneideinsatz;
- **Fig. 9**: einen Ausschnitt eines Werkzeugkopfes einer Ausführung eines erfindungsgemäßen Drehwerkzeugs ohne ersten Schneideinsatz;
- **Fig. 10**: eine Ausführungsform eines erfindungsgemäßen austauschbaren zweiten Schneideinsatzes mit Schraube;
- **Fig. 11**: eine Schnittdarstellung eines erfindungsgemäßen austauschbaren zweiten Schneideinsatzes mit Schraube;
- **Fig. 12**: eine Schnittdarstellung eines Ausschnitts eines Werkzeugkopfes einer Ausführung eines erfindungsgemäßen Drehwerkzeugs durch die Längsachse des Einsatzgrundkörpers des zweiten Schneideinsatzes;
- **Fig. 13**: einen Ausschnitt eines Werkzeugkopfes einer Ausführung eines erfindungsgemäßen Drehwerkzeugs mit erstem Schneideinsatz;
- **Fig. 14**: eine Ausführungsform eines Schneideinsatzsets;
- **Fig. 15**: eine weitere Ausführungsform eines Schneideinsatzsets.

In den Figuren sind gleiche oder gleichartige Komponenten mit gleichen Bezugszeichen beziffert.

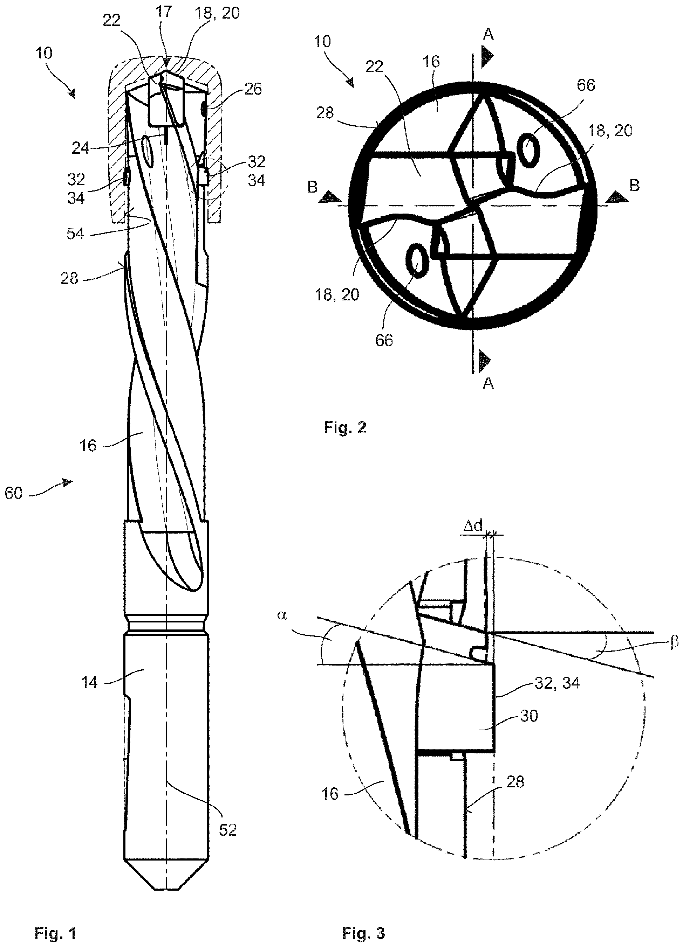

Fig. 1 zeigt eine Außenansicht einer Ausführungsform eines erfindungsgemäßen Drehwerkzeugs 10 beim Einsatz in einer Bohrung. Das Drehwerkzeug 10 weist einen Werkzeuggrundkörper 60 mit einem Einspannabschnitt 14 sowie einen Werkzeugkopf 16 auf. Der Werkzeugkopf 16 befindet sich in der Darstellung teilweise innerhalb einer Bohrung mit einer Innenoberfläche 54. Der Werkzeugkopf 16 weist an der Frontseite 17 eine Einsatznut 58 mit einem Entlastungsschlitz 24 auf, wobei in die Einsatznut 58 ein erster Schneideinsatz 22 eingebracht ist. Der erste Schneideinsatz 22 wird durch eine Schraube 26 mit dem Werkzeugkopf 16 befestigt, wobei die Schraube 26 radial durch den Werkzeugkopf 16 und durch den ersten Schneideinsatz 22 verläuft. In einer axialversetzten Position bezüglich der Frontseite 17 in Richtung Einspannabschnitt 14 ist ein zweiter Schneideinsatz 30 am Werkzeugkopf 16 angebracht. Ein zweiter Spanbereich 32 mit einer zweiten Schneidkante 34 des zweiten Schneideinsatzes 30 ragt radial an der abgebildeten linken und rechten Seite des Werkzeugkopfes 16 heraus. Die Darstellung zeigt eine Ansicht aus einer parallel versetzten Ebene zum Querschnitt der Einsatznut 58. Dadurch ist die Einsatznut 58 mit dem ersten Schneideinsatz 22 in der Seitenansicht sichtbar. Es wird deutlich, dass der zweite Schneideinsatz 30 nicht in einer rechtwinkligen Lage zum ersten Schneideinsatz 22 im Werkzeugkopf 16 angeordnet ist, da der links dargestellte zweite Spanbereich 32 teilweise vom Werkzeugkopf 16 verdeckt wird. Die radiale Ausrichtung des zweiten Schneideinsatzes 30 bestimmt sich nach dem Verlauf der Wendel der Kühlmittelkanäle, d. h. einem Spiralwinkel der Kühlmittelkanäle im Werkzeugkopf 16 und dem axialen Abstand zur Frontseite 17 des Werkzeugkopfs 16, sodass der zweite Schneideinsatz 30 bevorzugt gleiche Seitenabstände zum Kühlmittelverlauf aufweist.

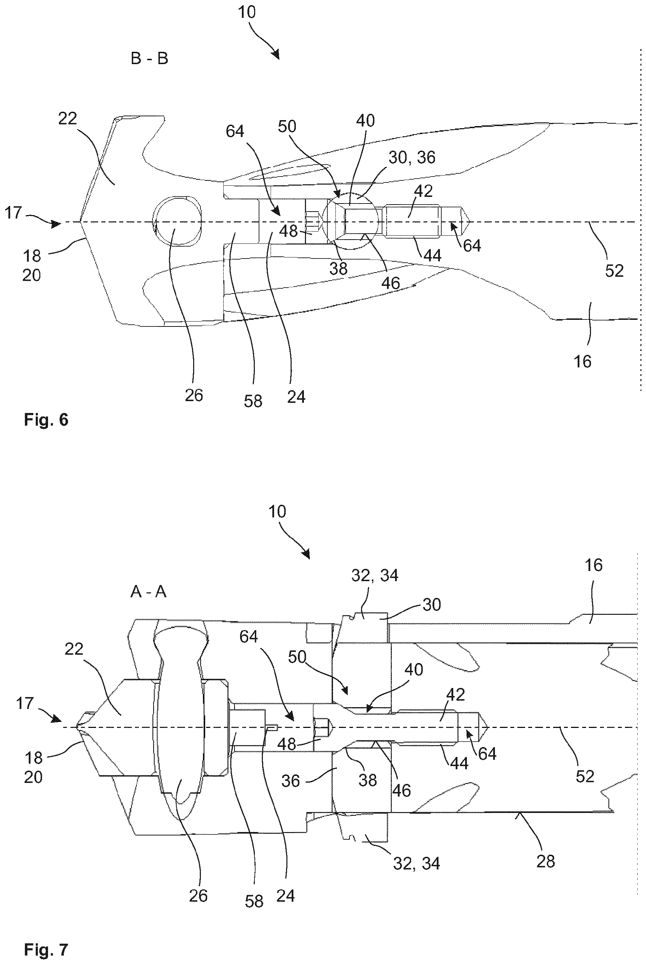

Eine Draufsicht auf den Werkzeugkopf 16 und den ersten Schneideinsatz 22 zeigt Fig. 2. In dieser Ansicht sind zwei Austrittsausgänge von Kühlmittelleitungen 66 des Werkzeuggrundkörpers 60 sichtbar. In der Draufsicht sind die beiden ersten Spanbereiche 18 mit den ersten Spankanten 20 des ersten Schneideinsatzes 22 erkennbar sowie die Werkzeugkopfoberfläche 28 des Werkzeugkopfes 16. Die zugehörigen Schnittdarstellungen A - A und B - B zeigen die Figs. 6 und 7.

Einen Detailausschnitt eines zweiten Spanbereichs 32 aus Fig. 1 zeigt Fig. 3. Die zweite Spankante 34 überragt um einen Abstand Δd den Radius der ersten Spankante 20, sodass die zweite Spankante 34 weiteres Material abtragen kann und demnach etwas nachschneidet und die Oberfläche einer Bohrung nachbearbeitet. Eine Nachbearbeitung einer Oberfläche einer Bohrung ist mit einem derartigen zweiten Schneideinsatz mit einer zweiten Spankante 34 in Form einer Reibschneide bevorzugt möglich. Die Winkel α und β betragen bevorzugt 10° bis 20°, insbesondere 15°. Der Überstand Δd beträgt bevorzugt 0,3 mm bis 0,6 mm, insbesondere 0,5 mm.

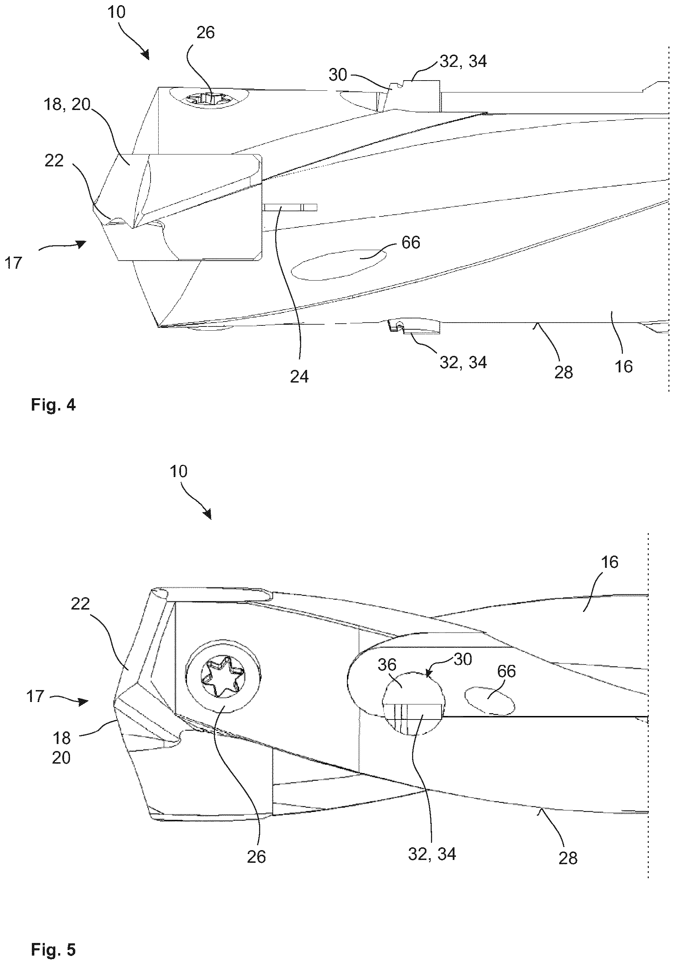

Fig. 4 zeigt einen Ausschnitt eines Werkzeugkopfes 16 einer Ausführung eines erfindungsgemäßen Drehwerkzeugs 10 in einer perspektivischen Seitenansicht. Die Seitenansicht zeigt den ersten Schneideinsatz 22, wobei in dieser Darstellung nur ein erster Spanbereich 18 sichtbar ist. Der erste Schneideinsatz 22 wird von der Frontseite 17 auf den Werkzeugkopf 16 montiert, indem dieser in eine Einsatznut 58 (nicht sichtbar) eingesteckt und mit einer radial eingebrachten Schraube 26 am Werkzeugkopf, die in die Flanken des Werkzeugkopfes, die die Einsatznut 58 ausbilden, eingreift, fixiert wird. Unterhalb der Einsatznut 58 befindet sich ein Entlastungsschlitz 24, der den Ein- und Ausbau des ersten Schneideinsatzes 22 in der Einsatznut 58 erleichtert und eine minimale Verbreiterung der Einsatznut 58 ermöglicht, so dass diese eine Klemmwirkung auf den ersten Schneideinsatz ausüben kann. In einer in Axialrichtung des Werkzeugkopfes 16 rückwärtig versetzten Position ist der zweite Schneideinsatz 30 mit zwei zweiten Spanbereichen 32 angeordnet. Dieser wird mit seinem Einsatzgrundkörper 36 in ein radiales Durchgangsloch (nicht sichtbar) des Werkzeugkopfes 16 eingeschoben, so dass die beiden zweiten Spanbereiche 32 geringfügig über den Durchmesser des Werkzeugkopfes 16 überstehen, wobei dieser Überstand bevorzugt identisch ist. Weiterhin ist eine Austrittsöffnung einer Kühlmittelleitung 66 dargestellt.

In Fig. 5 ist eine Seitenansicht aus einer um 90° gedrehten Position der Ausführung aus Fig. 4 dargestellt. In dieser Ansicht ist der zweite Schneideinsatz 30 in einer Draufsicht auf einen zweiten Spanbereich 32 sichtbar. Der Einsatzgrundkörper 36 weist einen kreisförmigen Querschnitt auf, wobei der zweite Spanbereich 32 mit der zweiten Spankanten 34 einen teilkreisförmigen Querschnitt besitzt und sozusagen eine teilweise Verlängerung des Einsatzgrundkörpers 36 ausbildet. Die Schraube 26 ist nicht in einer kompletten Draufsicht auf den Schraubenkopf sichtbar. Dies zeigt, dass die Schraube nicht in einer Ebene mit dem Einsatzgrundkörper 36 des zweiten Schneideinsatzes 30 liegen muss.

Die Figs. 6 und 7 zeigen zwei Schnittdarstellung, wobei die Lage der Schnitte A - A und B - B der Fig. 2 zu entnehmen sind.

Fig. 6 zeigt einen Längsschnitt durch einen Ausschnitt eines Werkzeugkopfes16. Die Schnittebene B - B verläuft mittig durch den Einsatzgrundkörper 36 des zweiten Schneideinsatzes 30, sodass das Befestigungsmittel 42, das den zweiten Schneideinsatz 30 befestigt, ebenfalls im Schnitt sichtbar ist. Der zweite Schneideinsatz 30 besitzt mittig ein Durchgangsloch 40, durch das ein Befestigungsmittel 42, beispielsweise eine Befestigungsschraube oder ein Arretierungsbolzen, durchgeschoben werden kann. Das Befestigungsmittel 42 besitzt in dieser Ausführungsform als Inbusschraube mit konischem Schraubenkopf einen vorderen Abschnitt mit einem Gewinde 44, sowie einen hinteren Abschnitt mit einer glatten Oberfläche 46. Mit dem Gewinde 44 wird das Befestigungsmittel 42 in ein Sackloch 64 des Werkzeuggrundkörpers geschraubt, das sich auf der Rotationsachse 52 befindet. Im eingeschraubten Zustand befindet sich der Abschnitt mit der glatten Oberfläche 46 zumindest teilweise innerhalb des Durchgangsloches 40. Auf einer Seite des Durchgangsloches 40 befindet sich eine konische Vertiefung 38 im Einsatzgrundkörper 36, in welche der Kopf 48 des Befestigungsmittels 42 zumindest teilweise versenkt werden kann, um eine Lagefixierung zu gewährleisten. Somit wird der zweite Schneideinsatz 30 zentriert auf der Rotationsachse 52 des Drehwerkzeugs 10 befestigt. Der Kopf 48 des Befestigungsmittels 42 befindet sich in einem radial erweiterten Abschnitt des Sackloches 64, wobei das Befestigungsmittel 42 von der Frontseite 17 des Werkzeugkopfes 16 in der Einsatznut 58 montiert wird. In Richtung Frontseite 17 wird das Sackloch 64 von der Einsatznut 58 geschnitten, wobei das Sackloch 64 in diesem Bereich den Entlastungsschlitz 24 aufweist. In die Einsatznut 58 wird der erste Schneideinsatz 22 von der Frontseite 17 eingeschoben oder eingesetzt. Die Schnittdarstellung zeigt ebenfalls einen Schnitt durch die Schraube 26, die zur Befestigung des ersten Schneideinsatzes 22 dient.

Fig. 7 zeigt den Schnitt A - A, der um 90° verdreht zu Schnitt B - B verläuft. Der Schnitt verläuft längs durch den Einsatzgrundkörper 36 des zweiten Schneideinsatzes 30. In dieser Schnittdarstellung ist der Entlastungsschlitz 24 sowie die Einsatznut 58 besonders gut erkennbar. Die Schraube 26 verläuft nicht direkt in der Schnittebene sondern in einem Winkel dazu, sodass diese in der Schnittdarstellung gewölbt erscheint.

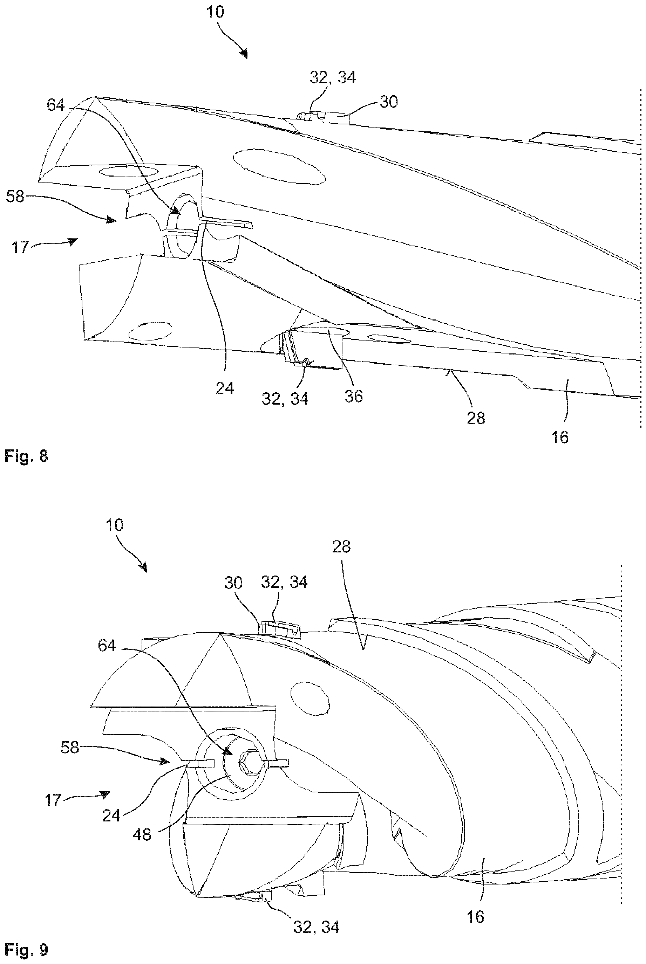

Die Figs. 8 und 9 zeigen zwei dreidimensionale Ansichten des Werkzeugkopfes 16 ohne ersten Schneideinsatz 22, sodass die Geometrie der Einsatznut 58 sowie der Übergang zwischen der Einsatznut 58 und dem Sackloch 64 mit dem Entlastungsschlitz 24 erkennbar sind. Der zweite Schneideinsatz 30 ist in dem Werkzeugkopf 16 montiert. Der Kopf 48 des Befestigungsmittels 42 ist in Fig. 9 in dem Sackloch 64 erkennbar. Aus der in Fig. 9 dargestellten Position kann das Befestigungsmittel 42 eingebracht werden, um den zweiten Schneideinsatz 30 zu fixieren. Die Einsatznut 58 verläuft über die komplette Breite des Werkzeugkopfes 16, das Sackloch 64 befindet sich zentriert auf der Rotationsachse des Drehwerkzeugs 10.

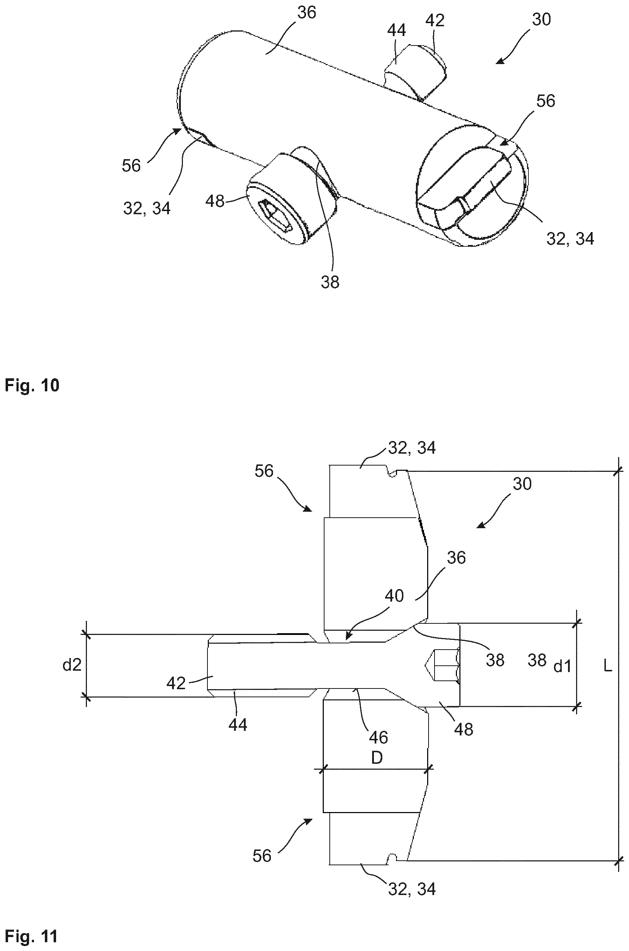

Fig. 10 zeigt eine Ausführungsform eines zweiten Schneideinsatzes 30 mit Befestigungsmittel 42. Der Einsatzgrundkörper 36 weist einen kreisförmigen Querschnitt auf, wobei dieser Querschnitt in den Endbereichen 56 in einen teilkreisförmigen Querschnitt übergeht, um den Spanbereich 32 auszubilden. In diesem Bereich ist jeweils ein zweiter Spanbereich 32 mit jeweils einer zweiten Spankante 34 angebracht, z.B. angelötet, angeschweißt oder angeschraubt. Das Befestigungsmittel 42 ist ein Schraubentyp, wobei der Kopf 48 in dieser Ausführungsform nicht in dem Durchgangsloch 40 versenkt werden kann. Der Schaft der Schraube weist einen Abschnitt mit einem Gewinde 44 auf, das in einen Werkzeugkopf 16 eingeschraubt werden kann. Der übrige Schaft der Schraube besitzt eine glatte Oberfläche und kann in dieser Ausführungsform einen sich verjüngenden Querschnitt aufweisen (nicht sichtbar). So kann die Schraube beim Einschrauben in eine konische Vertiefung 38 im Durchgangsloch 40 zentriert werden.

Eine Schnittdarstellung einer weiteren Ausführungsform eines zweiten Schneideinsatzes 30 zeigt Fig. 11. Der Einsatzgrundkörper 36 weist einen sich veränderten Querschnitt D über die Länge L auf, wobei der Querschnitt zu den Endbereichen 56 hin abnimmt. An den Endbereichen 56 befindet sich jeweils ein zweiter Spanbereich 32 mit einer zweiten Spankante 34. Das Durchgangsloch 40 ist mittig im Einsatzkörper 36 angeordnet und so dimensioniert, dass das Befestigungsmittel 42, hier eine Schraube, gerade noch durch das Durchgangsloch 40 hindurchgesteckt werden kann. Der Kopf 48 der Schraube weist einen größeren Durchmesser d1 als das Durchgangsloch 40 mit einem Mindestdurchmesser d2 auf. Durch die konische Vertiefung 38 kann die Schraube den zweiten Schneideinsatz 30 fixieren und zentrieren.

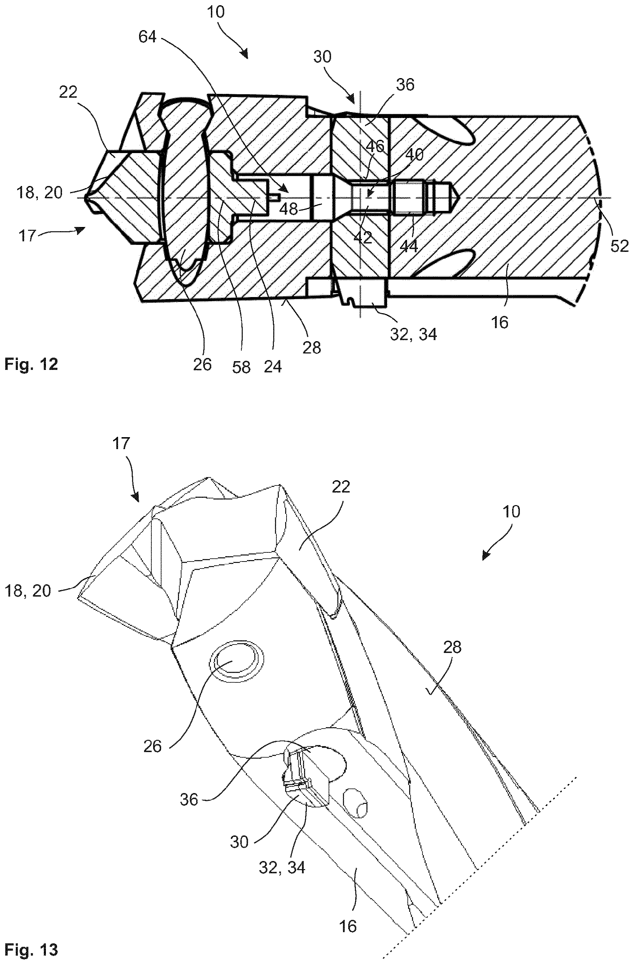

In Fig. 12 ist eine weitere Schnittdarstellung eines Werkzeugkopfes 16 dargestellt. Hierbei wird besonders deutlich, dass zwischen dem Kopf 48 des Befestigungsmittels 42 und dem ersten Schneideinsatz 22 im eingebrauten Zustand beider Schneideinsätze 22, 30 ein Zwischenraum im Sackloch 64 verbleibt. Fig. 13 zeigt eine dreidimensionale Ansicht der Ausführungsform aus Fig. 12. Es ergibt sich alternativ die Möglichkeit, auf das Befestigungsmittel 42 zu verzichten, und einen in das Sackloch 64 hineinragenden Bolzen des ersten Schneideinsatzes zur Zentrierung und Lagefixierung des zweiten Schneideinsatzes 30 heranzuziehen.

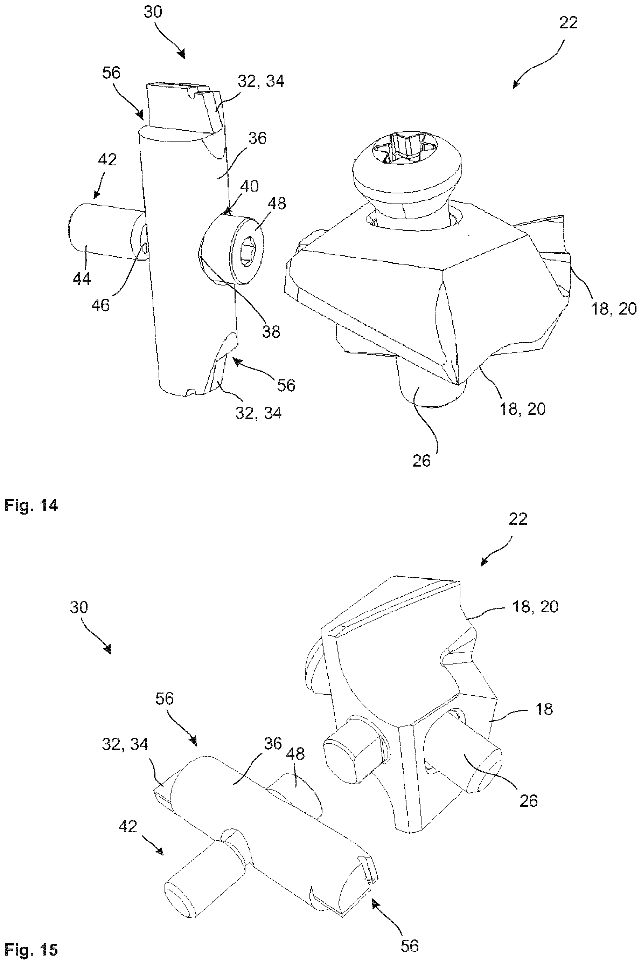

Fig. 14 zeigt eine Ausführungsform eines Schneideinsatzsets, bestehend aus einem ersten Schneideinsatz 22, einem zweiten Schneideinsatz 30, einem Befestigungsmittel 42 zur Befestigung des zweiten Schneideinsatzes 30 sowie einer Schraube 26 zur Befestigung des ersten Schneideinsatzes an einem Werkzeuggrundkörper 60. Der erste Schneideinsatz 22 weist in dieser Ausführungsform zwei erste Spanbereiche 18 mit jeweils einer ersten Spankante 20 auf. Der erste Schneideinsatz wird mittels einer Schraube 26 in einer Einsatznut 58 am Werkzeugkopf 16 befestigt. Der zweite Schneideinsatz 30 besteht aus einem Einsatzgrundkörper 36 der einen zylinderförmigen Querschnitt aufweist, der sich zu den Endbereichen 56 hin verjüngt und in einen teilkreisförmigen Querschnitt übergeht. In jedem Endbereich 56 ist ein zweiter Spanbereich 32 mit einer zweiten Spankante 34 angebracht. Zentrisch im zweiten Schneideinsatz 30 befindet sich ein Durchgangsloch 40 zur Durchführung eines Befestigungsmittels 42, wie einer Schraube oder einem Bolzen. Das Durchgangsloch 40 weist an einem Ende eine konische Vertiefung 38 auf. Bei Montage des zweiten Schneideinsatzes 30 in einem Werkzeugkopf 16 dient diese konische Vertiefung 38 zur Zentrierung des zweiten Schneideinsatzes 30 auf der Rotationsachse des Drehwerkzeugs 10. Das Befestigungsmittel 42 hat einen Kopf 48, einen Abschnitt mit einer glatten Oberfläche 46 sowie einen Abschnitt mit einem Gewinde 44. Mit dem Gewinde 44 kann das Befestigungsmittel 42 in einen Werkzeugkopf bzw. einen Werkzeugschaft eingeschraubt werden. Das Schneideinsatzset kann als Austauschteil bei Verschleiß angeboten und in einem Werkzeuggrundkörper 60 eingesetzt werden. Somit sind die Ersatzkosten für verschleißbedinge Abnutzung der Schneiden drastisch geringer, und ein Werkzeuggrundkörper 60 mit Kühlmittelkanälen 66 und Spanführungskanälen kann mit extrem hoher Standzeit eingesetzt werden.

Fig. 15 zeigt eine weitere Ansicht des in Fig. 14 dargestellten Schneideinsatzsets. Der erste Schneideinsatz 22 besitzt an der Unterseite einen Zapfen, der in ein Sackloch 64 des Werkzeugkopfes 60 eingreifen kann, um den ersten Schneideinsatz 22 zusätzlich radial fixiert befestigen zu können.

### Bezugszeichenliste

- 10: Drehwerkzeug
- 14: Einspannabschnitt
- 16: Werkzeug kopf
- 17: Frontseite
- 18: erster Spanbereich
- 20: erste Spankante
- 22: erster Schneideinsatz
- 24: Entlastungsschlitz
- 26: Schraube für Schneideinsatz
- 28: Werkzeug kopfoberfläche
- 30: zweiter Schneideinsatz
- 32: zweiten Spanbereich
- 34: zweite Span kante
- 36: Einsatzgrundkörper
- 38: konische Vertiefung
- 40: Durchgangsloch für Befestigungsmittel
- 42: Befestigungsmittel
- 44: Gewinde
- 46: glatte Oberfläche
- 48: Kopf des Befestigungsmittels
- 50: Durchgangsbohrung für Reibschneide
- 52: Rotationsachse
- 54: Oberfläche der Bohrung
- 56: Endbereich des Grundkörpers
- 58: Einsatznut
- 60: Werkzeuggrundkörper
- 64: Sackloch
- 66: Kühlmittelkanal

- *D*: Durchmesser des Einsatzgrundkörpers
- *L*: Länge des Einsatzgrundkörpers
- *Δd*: Überstand der zweiten Spankante zur ersten Spankante

## Patentansprüche

1. Drehwerkzeug (10) für eine spanende Bearbeitung von Werkstücken, mit einem Werkzeuggrundkörper (60) umfassend einen Einspannabschnitt (14) und einen Werkzeugkopf (16), sowie einen austauschbaren ersten Schneideinsatz (22) mit zumindest einem, eine erste Spankante (20) aufweisenden, ersten Spanbereich (18), wobei der erste Schneideinsatz (22) von der Frontseite (17) des Werkzeugkopfes (16) in eine Einsatznut (58) des Werkzeuggrundkörpers (60) einsteckbar und verdrehsicher befestigbar ist, sowie einem austauschbaren zweiten Schneideinsatz (30) als Reibschneideinsatz, der in einer in Achsrichtung des Drehwerkzeugs (10) in Richtung Einspannabschnitt (14) versetzten Position zum ersten Schneideinsatz (22) am Werkzeugkopf (16) befestigt ist, und einen Einsatzgrundkörper (36) und zumindest einen, zumindest eine zweite Spankante (34) aufweisenden, zweiten Spanbereich (32) umfasst, **dadurch gekennzeichnet, dass** der zweite Schneideinsatz (30) über eine zentrische Position bezüglich des Werkzeugkopfquerschnittes von der Frontseite (17) des Werkzeugkopfes (16) fixierbar ist, wobei in der Einsatznut (58) des ersten Schneideinsatzes (22) ein Befestigungsmittel (42) für den zweiten Schneideinsatz (30) angeordnet ist und von der Frontseite (17) zugänglich ist, und dass das Befestigungsmittel (42) länger als der Durchmesser (D) des Einsatzgrundkörpers (36) ausgebildet ist, wobei das Befestigungsmittel (42) im eingebauten Zustand in dem Einsatzgrundkörper (36) in zumindest einem Bereich außerhalb des Einsatzgrundkörpers (36) ein Gewinde (44) zur Verschraubung mit dem Werkzeuggrundkörper (60) aufweist.

2. Drehwerkzeug (10) nach Anspruch 1, **dadurch gekennzeichnet, dass** der Einsatzgrundkörper (36) austauschbar in eine radiale Durchgangsbohrung (50) des Werkzeugkopfs (16) eingeschoben ist.

3. Drehwerkzeug (10) nach einem der vorgenannten Ansprüche, **dadurch gekennzeichnet, dass** die Länge L des Einsatzgrundkörpers (36) geringer oder gleich dem Durchmesser des Werkzeugkopfes (16) ist und der Spanbereich (32) um einen radialen Abstand (Δd) über den Radius des ersten Spanbereichs (20) übersteht.

4. Drehwerkzeug (10) nach einem der vorgenannten Ansprüche, **dadurch gekennzeichnet, dass** der Einsatzgrundkörper (36) zylinderförmigen ausgebildet ist und einen kreisförmigen, teilkreisförmigen, rechteckigen oder elliptischen Querschnitt aufweist.

5. Drehwerkzeug (10) nach einem der vorgenannten Ansprüche, **dadurch gekennzeichnet, dass** der zweite Schneideinsatz (30) punktsymmetrisch bezüglich eines Punktes auf einer Querschnittfläche auf der halben Länge des zweiten Schneideinsatzes (30) ausgebildet ist.

6. Drehwerkzeug (10) nach einem der vorgenannten Ansprüche, **dadurch gekennzeichnet, dass** der Einsatzgrundkörper (36) und der zweite Spanbereich (32) aus getrennten Bauteilen ausgebildet sind, wobei der zweite Spanbereich (32) mit der zweiten Spankante (34) an den Einsatzgrundkörper (36) angelötet, angeschweißt oder angeschraubt ist.

7. Drehwerkzeug (10) nach einem der vorgenannten Ansprüche, **dadurch gekennzeichnet, dass** der Einsatzgrundkörper (36) ein radiales Durchgangsloch (40) quer zur Einschubrichtung und eine konische Vertiefung (38) aufweist, in der ein Kopf (48) des Befestigungsmittels (42) zumindest teilweise versenkbar ist, wodurch der zweite Schneideinsatz (30) in dem Werkzeugkopf (16) auf der Rotationsachse (52) zentriert befestigt ist.

8. Drehwerkzeug (10) nach einem der vorgenannten Ansprüche, **dadurch gekennzeichnet, dass** die Einsatznut (58) in Richtung Einspannabschnitt (14) ein Sackloch (64) aufweist, das mindestens zwei Abschnitte mit unterschiedlichem Durchmesser aufweist, wobei mindestens ein Abschnitt in Richtung Werkzeugschaft angeordneter Abschnitt, ein Gewinde aufweist.

## Claims

1. Rotary tool (10) for a machining of workpieces, comprising a tool main body (60) comprising a clamping section (14) and a tool head (16), as well as an exchangeable first cutting insert (22) having at least one first cutting region (18) having a first cutting edge (20), wherein the first cutting insert (22) can be inserted from a front side (17) of the tool head (16) into an insert groove (58) of the tool main body (60) and can be fastened therein in a rotationally fixed manner, as well as an exchangeable second cutting insert (30) as a reaming cutting insert, which is fastened on the tool head (16) in a position offset in an axial direction of the rotary tool (10) towards the clamping section (14) with respect to the first cutting insert (22), and comprises an insert main body (36) and at least one second cutting region (32) having at least one second cutting edge (34), **characterized in that** the second cutting insert (30) can be fixed via a centered position with respect to a tool head cross-section from the front side (17) of the tool head (16), wherein a fastening means (42) for the second cutting insert (30) is arranged in the insert groove (58) of the first cutting insert (22) and is accessible from the front side (17), and **in that** the fastening means (42) is longer than a diameter (D) of the insert main body (36), wherein the fastening means (42), in the installed state in the insert main body (36), has a thread (44) in at least one area outside the insert main body (36) for screwing to the tool main body (60).

2. Rotary tool (10) according to claim 1, **characterized in that** the insert main body (36) is interchangeably inserted into a radial through-bore (50) of the tool head (16).

3. Rotary tool (10) according to any one of the preceding claims, **characterized in that** the length L of the insert main body (36) is less than or equal to the diameter of the tool head (16) and the cutting region (32) by a radial distance (Δd) protrudes beyond the radius of the first cutting region (20).

4. Rotary tool (10) according to any one of the preceding claims, **characterized in that** the insert main body (36) is cylindrical in shape and has a circular, partially circular, rectangular or elliptical cross-section.

5. Rotary tool (10) according to any one of the preceding claims, **characterized in that** the second cutting insert (30) is configured to be point-symmetrical in relation to a point on a cross-sectional surface at half the length of the second cutting insert (30).

6. Rotary tool (10) according to any one of the preceding claims, **characterized in that** the insert main body (36) and the second cutting region (32) are formed from separate components, wherein the second cutting region (32) with the second cutting edge (34) is soldered, welded or screwed onto the insert main body (36).

7. Rotary tool (10) according to any one of the preceding claims, **characterized in that** the insert main body (36) has a radial through-hole (40) transverse to the insertion direction and has a conical recess (38) in which a head (48) of the fastening means (42) can be inserted at least partially, whereby the second cutting insert (30) is fastened in the tool head (16) centered on the axis of rotation (52).

8. Rotary tool (10) according to any one of the preceding claims, **characterized in that** the insert groove (58) has a blind hole (64) that extends toward the clamping section (14) and has least two sections with different diameters, wherein at least one section that is arranged in the direction of the tool shank is provided with a thread.

## Revendications

1. Outil rotatif (10) pour un usinage de pièces à usiner, comprenant un corps principal d'outil (60) comprenant une section de serrage (14) et une tête d'outil (16), ainsi qu'un premier insert de coupe (22) interchangeable avec au moins une première zone de coupe (18) présentant une première arête de coupe (20), le premier insert de coupe (22) pouvant être inséré depuis une face frontale (17) de la tête d'outil (16) dans une rainure d'insertion (58) du corps principal d'outil (60) et pouvant y être fixé de manière fixe en rotation, ainsi qu'un deuxième insert de coupe (30) interchangeable, servant d'un insert de coupe d'alésage, qui est fixé sur la tête d'outil (16) dans une position décalée dans la direction axiale de l'outil rotatif (10) vers la section de serrage (14) par rapport au premier insert de coupe (22), et qui comprend un corps principal d'insert (36) et au moins une deuxième zone de coupe (32) présentant au moins une deuxième arête de coupe (34), **caractérisé en ce que** le deuxième insert de coupe (30) peut être fixé par une position centrée par rapport à une section transversale de la tête d'outil depuis la face avant (17) de la tête d'outil (16), un moyen de fixation (42) pour le deuxième insert de coupe (30) étant disposé dans la rainure d'insertion (58) du premier insert de coupe (22) et étant accessible depuis la face avant (17), et **en ce que** le moyen de fixation (42) est plus long qu'un diamètre (D) du corps principal d'insert (36), le moyen de fixation (42), à l'état installé dans le corps principal d'insert (36), présentant un filetage (44) dans au moins une zone à l'extérieur du corps principal d'insert (36) pour le vissage sur le corps principal de l'outil (60).

2. Outil rotatif (10) selon la revendication 1, **caractérisé en ce que** le corps principal d'insert (36) est inséré de manière interchangeable dans un alésage radial traversant (50) de la tête d'outil (16).

3. Outil rotatif (10) selon l'une quelconque des revendications précédentes, **caractérisé en ce que** la longueur L du corps principal d'insert (36) est inférieure ou égale au diamètre de la tête d'outil (16) et la zone de coupe (32) fait saillie d'une distance radiale (Ad) au-delà du rayon de la première zone de coupe (20).

4. Outil rotatif (10) selon l'une quelconque des revendications précédentes, **caractérisé en ce que** le corps principal d'insert (36) est de forme cylindrique et présente une section transversale circulaire, partiellement circulaire, rectangulaire ou elliptique.

5. Outil rotatif (10) selon l'une quelconque des revendications précédentes, **caractérisé en ce que** le deuxième insert de coupe (30) est configuré pour présenter une symétrie ponctuelle par rapport à un point d'une surface de section transversale à la moitié de la longueur du deuxième insert de coupe (30).

6. Outil rotatif (10) selon l'une quelconque des revendications précédentes, **caractérisé en ce que** le corps principal d'insert (36) et la deuxième zone de coupe (32) sont formés à partir de composants séparés, la deuxième zone de coupe (32) avec la deuxième arête de coupe (34) étant brasée, soudée ou vissée sur le corps principal d'insert (36).

7. Outil rotatif (10) selon l'une quelconque des revendications précédentes, **caractérisé en ce que** le corps principal d'insert (36) présente un trou radial traversant (40) transversalement à la direction d'insertion et un évidement conique (38) dans lequel une tête (48) du moyen de fixation (42) peut être insérée au moins partiellement, le deuxième insert de coupe (30) étant fixé dans la tête d'outil (16) centrée sur l'axe de rotation (52).

8. Outil rotatif (10) selon l'une quelconque des revendications précédentes, **caractérisé en ce que** la rainure d'insertion (58) présente un trou borgne (64) s'étendant vers la section de serrage (14) et comportant au moins deux sections de diamètres différents, au moins une section disposée en direction de la tige de l'outil présentant un filetage.
